# EUROPEAN PATENT APPLICATION

(11) **EP 4 525 066 A1**
(43) Date of publication of application: **19.03.2025**
(21) Application number: 22949842.3
(22) Date of filing: 07.07.2022
(51) Int. Cl.: H01M 4/13

(54) **ELECTRODE SHEET ASSEMBLY, ELECTRODE ASSEMBLY, BATTERY CELL, BATTERY, AND ELECTRIC DEVICE**

(71) Applicant: Contemporary Amperex Technology Co., Limited, Jiaocheng District Ningde Fujian 352100 (CN)
(72) Inventor: GU, Hui, Ningde, Fujian 352100 (CN); JIANG, Lingyan, Ningde, Fujian 352100 (CN); JIN, Haizu, Ningde, Fujian 352100 (CN)
(74) Representative: Gong, Jinping
(86) International application number: PCT/CN2022/104401
(87) International publication number: WO 2024/007258

(57) **Abstract**

The present disclosure provides an electrode plate assembly, an electrode assembly, a battery cell, a battery, and an electrical device. The electrode plate assembly includes an electrode plate and a protection layer. The electrode plate includes an electrode plate body. The electrode plate body includes an end region. The protection layer is fixed onto the electrode plate body, and includes a protection layer body section that covers the end region along an extension direction of the end region. The protection layer body section includes a main end face body protection portion and two lateral face body protection portions connected respectively to two sides of the main end face body protection portion. The main end face body protection portion covers a main end face of the end region. Each of the lateral face body protection portions extends from the main end face of the end region to an inner side of the electrode plate body and covers a lateral face of the end region, the lateral face being close to the main end face.

## Description

### TECHNICAL FIELD

The present disclosure relates to the technical field of batteries, and in particular, to an electrode plate assembly, an electrode assembly, a battery cell, a battery, and an electrical device.

### BACKGROUND

**In** the battery field, burrs may be generated in an end region of an electrode plate of a battery during production and processing of the electrode plate and an electrode assembly. For example, during production of a jelly-roll electrode assembly, a positive electrode plate, a negative electrode plate, and a separator are stacked in a preset sequence and then wound continuously on a piece of winding equipment until a suitable size. Subsequently, the positive electrode plate, the negative electrode plate, and the separator are cut off by a cutter on the winding equipment. The positive electrode plate, the negative electrode plate, and the separator that are wound together form an electrode assembly, and burrs are prone to occur near a main end face of the positive electrode plate or negative electrode plate. When the burrs occur in the end region of the electrode plate or electrode assembly of a battery cell, the battery cell is prone to expand during use. Consequently, an internal short circuit is prone to occur near the burry end regions of the positive electrode plate and negative electrode plate.

### SUMMARY

An objective of the present disclosure is to provide an electrode plate assembly, an electrode assembly, a battery cell, a battery, and an electrical device that are not prone to induce an internal short circuit of the battery cell.

A first aspect of the present disclosure provides an electrode plate assembly. The electrode plate assembly includes an electrode plate and a protection layer. The electrode plate includes an electrode plate body. The electrode plate body includes an end region. The protection layer is fixed onto the electrode plate body, and includes a protection layer body section that covers the end region along an extension direction of the end region. The protection layer body section includes a main end face body protection portion and two lateral face body protection portions connected respectively to two sides of the main end face body protection portion. The main end face body protection portion covers a main end face of the end region. Each of the lateral face body protection portions extends from the main end face of the end region to an inner side of the electrode plate body and covers a lateral face of the end region, the lateral face being close to the main end face.

In the electrode plate assembly of the present disclosure, a protection layer fixed onto the electrode plate body is disposed at the end region of the electrode plate of the electrode plate assembly. The protection layer includes a protection layer body section that covers the end region along the extension direction of the end region. The main end face body protection portion 3211 and the two lateral face body protection portions 3212 of the protection layer 32 can wrap the main end face and the lateral faces of the end region, thereby isolating burrs in the end region of the electrode plate body from the separator, reducing the phenomena that the burrs at the end region pierce the separator, and in turn, reducing internal short circuits between the positive electrode plate body and the negative electrode plate body caused by the pierced separator, and improving safety performance of the electrode assembly, the battery cell, the battery, and the electrical device that each contain the electrode plate assembly.

In the electrode plate assembly in some embodiments, a maximum distance from an edge of the lateral face body protection portion to the main end face of the end region is 2 mm to 100 mm, the edge being located inside the main end face of the end region.

Two beneficial effects are achieved by setting a reasonable maximum distance from the edge of the lateral face body protection portion to the main end face of the end region, where the edge is located inside the main end face of the end region. One beneficial effect is to achieve a reasonable contact area between the protection layer and the lateral face of the end region, ensure sufficient bonding strength of the protection layer to the main end face and the lateral faces of the end region, and prevent the protection layer from partially or fully falling off and impairing the protection effect. The other beneficial effect is to limit the coverage area of the protection layer covering the lateral face of the end region, and limit the loss of the battery capacity caused by the disposed protection layer.

In an electrode plate assembly in some embodiments, the protection layer includes adhesive tape affixed to the electrode plate body.

The protection layer is made of the adhesive tape. The adhesive tape is easy to prepare, and the shape and size of the adhesive tape can easily meet design requirements. The adhesive tape may be prepared before being assembled with the electrode plate body. The adhesive tape is easy to assemble with the electrode plate body. The position at which the adhesive tape is assembled onto the electrode plate body is easy to control, thereby achieving relatively high processing efficiency of the electrode plate assembly, and bringing little impact on the production process of the electrode assembly.

**In** the electrode plate assembly in some embodiments, maximum distances from edges of the two lateral face body protection portions to the main end face of the end region are equal, the edges being located inside the main end face of the end region.

By equalizing the maximum distances from the edges of the two lateral face body protection portions to the main end face of the end region, where the edges are located inside the main end face of the end region, the contact areas between the two lateral face body protection portions and the lateral faces of the end region can be conveniently caused to fall within a reasonable range, thereby ensuring sufficient bonding strength of the protection layer to the main end face and the two lateral faces of the end region. The bonding strength of the protection layer to the two lateral faces is approximately equalized, thereby reducing the probability that a single side of the protection layer is detached and then the entire protection layer falls off gradually due to the single-side detachment, and ensuring a good protection effect of the protection layer. The approximately equalized bonding strength further equalizes the coverage areas of the two lateral face body protection portions covering the lateral faces of the end region, reduces the probability that one side covers a much larger area of the lateral face of the end region than the other side, and in turn, reduces the impact caused by the disposed protection layer onto the battery capacity.

**In** the electrode plate assembly in some embodiments, the two lateral face body protection portions are disposed symmetrically with respect to a thickness direction of the electrode plate.

By disposing the two lateral face body protection portions symmetrically with respect to the thickness direction of the electrode plate, the contact areas between the two lateral face body protection portions and the lateral faces of the end region are conveniently caused to fall within a reasonable range and be relatively consistent, thereby ensuring reasonable and approximately equalized bonding strength of the protection layer to the main end face and the two lateral faces of the end region. The approximately equalized bonding strength of the protection layer to the two lateral faces reduces the probability that a single side of the protection layer is detached and then the entire protection layer falls off gradually due to the single-side detachment, and ensures a good protection effect of the protection layer. The approximately equalized bonding strength further equalizes the coverage areas of the two lateral face body protection portions covering the lateral faces of the end region, reduces the probability that one side covers a much larger area of the lateral face of the end region than the other side, and in turn, reduces the impact caused by the disposed protection layer onto the battery capacity.

**In** the electrode plate assembly in some embodiments, an edge of the lateral face body protection portion, which is located inside the main end face of the end region, is a straight line edge; or an edge of the lateral face body protection portion, which is located inside the main end face of the end region, is a polygonal line edge; or an edge of the lateral face body protection portion, which is located inside the main end face of the end region, is a curve edge; or an edge of the lateral face body protection portion, which is located inside the main end face of the end region, is a combined edge that includes a straight line edge and a curve edge.

When the edge of the lateral face body protection portion, which is located inside the main end face of the end region, is a straight line edge, it is convenient to process and manufacture the protection layer and the electrode plate assembly, and the risk of damaging the protection layer is reduced. When the edge of the lateral face body protection portion, which is located inside the main end face of the end region, is a polygonal line edge, a curve edge, or a combined edge that includes a straight line edge and a curve edge, a sufficient bonding area between the protection layer and the electrode plate body is ensured so as to ensure sufficient bonding strength between the protection layer and the electrode plate body. At the same time, the coverage area of the protection layer covering the electrode plate body is minimized, and the impact caused by the disposed protection layer onto the battery capacity is reduced.

**In** the electrode plate assembly in some embodiments, the lateral face body protection portion is rectangular; or at least one protruding portion that protrudes away from the main end face is included in the lateral face body protection portion on an edge side located inside the main end face of the end region.

When the lateral face body protection portion is set to be rectangular, it is convenient to process and manufacture the protection layer and the electrode plate assembly, the risk of damaging the protection layer is reduced, and the impact caused by the protection layer onto the electrode plate body is more consistent along the extension direction of the end region. When at least one protruding portion that protrudes away from the main end face is included in the lateral face body protection portion on an edge side located inside the main end face of the end region, a sufficient bonding area between the protection layer and the electrode plate body is ensured so as to ensure sufficient bonding strength between the protection layer and the electrode plate body. At the same time, the coverage area of the protection layer covering the electrode plate body is minimized, and the impact caused by the disposed protection layer onto the battery capacity is reduced.

**In** the electrode plate assembly in some embodiments, an edge of the protruding portion on a protruding side is a polygonal line edge or a curve edge.

When the edge of the protruding portion on the protruding side is set to be a polygonal line edge or a curve edge, a sufficient bonding area between the protection layer and the electrode plate body is ensured so as to ensure sufficient bonding strength between the protection layer and the electrode plate body. At the same time, the coverage area of the protection layer covering the electrode plate body is minimized, and the impact caused by the disposed protection layer onto the battery capacity is reduced.

**In** the electrode plate assembly in some embodiments, the lateral face body protection portion includes a plurality of protruding portions connected sequentially along the extension direction of the end region.

The edge of the protruding portion on the protruding side is set to be a polygonal line edge or a curve edge. In this way, a sufficient bonding area between the protection layer and the electrode plate body is ensured so as to ensure sufficient bonding strength between the protection layer and the electrode plate body. At the same time, the coverage area of the protection layer covering the electrode plate body is minimized, and the impact caused by the disposed protection layer onto the battery capacity is reduced.

**In** the electrode plate assembly in some embodiments, at least two of the plurality of protruding portions are at least partially identical in shape and size.

The edge of the protruding portion on the protruding side is set to be a polygonal line edge or a curve edge. In this way, a sufficient bonding area between the protection layer and the electrode plate body is ensured so as to ensure sufficient bonding strength between the protection layer and the electrode plate body. At the same time, the coverage area of the protection layer covering the electrode plate body is minimized, and the impact caused by the disposed protection layer onto the battery capacity is reduced.

**In** the electrode plate assembly in some embodiments, the main end face body protection portion is in fit with and connected to the main end face of the end region of the electrode plate; and the lateral face body protection portion is in fit with and connected to the lateral face of the end region, the lateral face being close to the main end face.

When the main end face body protection portion is caused to be in fit with and connected to the main end face of the end region of the electrode plate, and the lateral face body protection portion is caused to be in fit with and connected to the lateral face of the end region, the lateral face being close to the main end face, the space occupied by the protection layer is reduced, the bonding area between the protection layer and the end region is increased, thereby reducing the size of the protection layer and saving the material of the protection layer on the basis of ensuring sufficient bonding strength between the protection layer and the electrode plate.

**In** the electrode plate assembly in some embodiments, the protection layer further includes a protection layer extension section connected to an end portion of the protection layer body section, the end portion being disposed along the extension direction of the end region.

The disposed protection layer extension section can protect the end portion disposed in the extension direction of the end region and containing the protection layer extension section, prevent the burrs on the end portion from piercing the separator, and further reduce the phenomena that the burrs at the end region pierce the separator, thereby further reducing internal short circuits between the positive electrode plate body and the negative electrode plate body caused by the pierced separator, and improving safety performance of the electrode assembly, the battery cell, the battery, and the electrical device that each contain the electrode plate assembly.

**In** the electrode plate assembly in some embodiments, along the extension direction of the end region, a length of the protection layer extension section is less than or equal to 20 mm.

By setting the length of the protection layer extension section to be less than or equal to 20 mm, this application can protect the end portion disposed in the extension direction of the end region and containing a protection layer extension section, and at the same time, prevent the electrode plate from being locally stressed additionally due to touching the protection layer extension section during further processing of the electrode plate assembly or during assembling of the electrode assembly or battery cell containing the electrode plate assembly, and prevent the risk such as lithium plating caused by the resulting deformation of the electrode plate.

**In** the electrode plate assembly in some embodiments, along the extension direction of the end region, two protection layer extension sections are connected to two ends of the protection layer body section respectively, and lengths of the two protection layer extension sections are equal.

The protection layer extension sections disposed at both ends of the protection layer body section can protect both end portions in the extension direction of the end region, prevent the burrs at the two ends of the end region from piercing the separator, and further reduce the phenomena that the burrs at the end region pierce the separator, thereby further reducing internal short circuits between the positive electrode plate body and the negative electrode plate body caused by the pierced separator, and improving safety performance of the electrode assembly, the battery cell, the battery, and the electrical device that each contain the electrode plate assembly. By equalizing the lengths of the two protection layer extension sections, this application can conveniently set the lengths of the protection layer extension sections at both ends to an appropriate length value, protect both ends in the extension direction of the end region effectively, prevent the electrode plate from being locally stressed additionally due to a protection layer extension section stressed because of an improper length of the protection layer extension section at one end, and prevent the risk such as lithium plating caused by the resulting deformation of the electrode plate.

**In** the electrode plate assembly in some embodiments, the protection layer extension section includes a main end face extension protection portion toward an extension surface of the main end face of the end region and a lateral face extension protection portion toward an extension surface of the lateral face of the end region; and/or the protection layer extension section includes a lateral end face protection portion that covers a lateral end face of the end region, the lateral end face being disposed along the extension direction of the end region.

All such structural forms of the protection layer extension section enables the protection layer extension section to isolate the burrs in the corresponding end portion of the end region from the separator, the end portion being disposed along the extension direction.

**In** the electrode plate assembly in some embodiments, at least one end region is located at an end of the electrode plate along a length direction of the electrode plate body, and the extension direction of the end region is a width direction of the electrode plate body.

Generally, the electrode plate in a jelly-roll electrode assembly is wound around an axis parallel to the width direction. The end region is located at an end of the electrode plate along the length direction of the electrode plate body, and the extension direction of the end region is the width direction of the electrode plate body. When the electrode plate assembly is used as an electrode plate in a jelly-roll electrode assembly, the end region is located at a radial inner end or a radial outer end of the jelly-roll electrode assembly. In this case, the protection layer not only serves the function of preventing burrs from piercing the separator, but also serves a function of supporting the electrode assembly to some extent. Compared with a jelly-roll electrode assembly without a protection layer, the jelly-roll electrode assembly of the present disclosure is of higher strength, and can reduce the phenomena of collapse of the electrode assembly caused by insufficient strength, thereby further improving the safety performance of the jelly-roll electrode assembly and of the battery cell and the battery that each contain the jelly-roll electrode assembly.

**In** the electrode plate assembly in some embodiments, the electrode plate is a positive electrode plate or a negative electrode plate.

When the electrode plate assembly includes a positive electrode plate, the electrode plate assembly may be used as a substitute for a conventional positive electrode plate to make an electrode assembly. In this case, the protection layer can prevent the burrs of the positive electrode plate from piercing the separator. When the electrode plate assembly includes a negative electrode plate, the electrode plate assembly may be used as a substitute for a conventional negative electrode plate to make an electrode assembly. In this case, the protection layer can prevent the burrs of the negative electrode plate from piercing the separator. Therefore, no matter whether the electrode plate is a positive electrode plate or a negative electrode plate, the electrode plate assembly can improve the safety performance of the electrode assembly, the battery cell, the battery, and the electrical device that each contain the electrode plate assembly.

A second aspect of the present disclosure provides an electrode assembly. The electrode assembly includes the electrode plate assembly disclosed in the first aspect of the present disclosure.

The electrode assembly of the present disclosure possesses the advantages of the electrode plate assembly of the present disclosure.

**In** the electrode assembly in some embodiments, the electrode assembly is a jelly-roll electrode assembly, and the extension direction of the end region of the electrode plate assembly is parallel to an axis of the jelly-roll electrode assembly.

The electrode assembly is a jelly-roll electrode assembly, the extension direction of the end region of the electrode plate assembly is set to be parallel to the axis of the jelly-roll electrode assembly, and the end region is located at a radial inner end or a radial outer end of the jelly-roll electrode assembly. In this case, the protection layer not only serves the function of preventing burrs from piercing the separator, but also serves a function of supporting the electrode assembly to some extent. Compared with a jelly-roll electrode assembly without a protection layer disposed at the end region of the electrode body, the jelly-roll electrode assembly of the present disclosure is of higher strength, and can reduce the phenomena of collapse of the electrode assembly caused by insufficient strength, thereby further improving the safety performance of the jelly-roll electrode assembly and of the battery cell and the battery that each contain the jelly-roll electrode assembly.

A third aspect of the present disclosure provides a battery cell. The battery cell includes the electrode assembly disclosed in the second aspect of the present disclosure.

The battery cell of the present disclosure possesses the advantages of the electrode assembly of the present disclosure.

A fourth aspect of the present disclosure provides a battery. The battery includes the battery cell disclosed in the third aspect of the present disclosure.

The battery of the present disclosure possesses the advantages of the battery cell of the present disclosure.

A fifth aspect of the present disclosure provides an electrical device. The electrical device includes the battery disclosed in the fourth aspect of the present disclosure. The battery is configured to provide electrical energy for the electrical device.

The electrical device of the present disclosure possesses the advantages of the battery cell of the present disclosure.

### BRIEF DESCRIPTION OF DRAWINGS

To describe the technical solutions in the embodiments of the present disclosure more clearly, the following outlines the drawings used in the embodiments of the present disclosure. Evidently, the drawings outlined below are merely a part of embodiments of the present disclosure. A person of ordinary skill in the art may derive other drawings from the outlined drawings without making any creative efforts.
FIG. 1 is a schematic structural diagram of an electrical device according to an embodiment of the present disclosure;
FIG. 2 is a schematic exploded view of a battery according to an embodiment of the present disclosure;
FIG. 3 is a schematic exploded view of a battery cell according to an embodiment of the present disclosure;
FIG. 4 is a schematic structural diagram of an electrode plate assembly in a wound state according to an embodiment of the present disclosure, in which a tab of an electrode plate is omitted in order to clearly show an electrode plate body and a positional relationship between the electrode plate body and a protection layer;
FIG. 5 is a schematic structural diagram of an electrode plate assembly in an unwound state according to an embodiment of the present disclosure;
FIG. 6 is an enlarged bottom view of FIG. 5;
FIG. 7 is a schematic close-up view of a part B shown in FIG. 6;
FIG. 8 is a schematic enlarged cross-sectional view obtained by sectioning along an A-A direction shown in FIG. 6;
FIG. 9 is a schematic close-up view of a part C shown in FIG. 8;
FIG. 10 is a schematic structural diagram of adhesive tape configured to make a protection layer according to an embodiment;
FIG. 11 is a schematic structural diagram of adhesive tape configured to make a protection layer according to another embodiment;
FIG. 12 is a schematic structural diagram of adhesive tape configured to make a protection layer according to still another embodiment;
FIG. 13 is a schematic structural diagram of adhesive tape configured to make a protection layer according to still another embodiment; and
FIG. 14 is a schematic structural diagram of adhesive tape configured to make a protection layer according to still another embodiment.

The drawings are not drawn to scale.

### DETAILED DESCRIPTION OF EMBODIMENTS

The following gives a more detailed description of implementations of the present disclosure with reference to drawings and embodiments. The detailed description of the following embodiments and drawings are intended to describe the principles of the present disclosure exemplarily, but not to limit the scope of the present disclosure. The present disclosure is not limited to the described embodiments.

In the description of the present disclosure, unless otherwise specified, "a plurality of" means at least two; the terms such as "up", "down", "left", "right", "in", and "out" indicating a direction or a position relationship are merely intended for ease or brevity of description of the present disclosure, but do not indicate or imply that the mentioned device or component is necessarily located in the specified direction and position or constructed or operated in the specified direction or position. Therefore, such terms are not to be understood as a limitation on the present disclosure. In addition, the terms "first", "second", "third", and so on are merely used for descriptive purposes, but not construed as indicating or implying relative importance. "Perpendicular" does not means exact perpendicularity, but means perpendicularity falling within an error tolerance range. "Parallel" does not mean exact parallelism, but means parallelism falling within an error tolerance range.

The directional terms used in the following description indicate the directions shown in the drawings, but are not intended to limit specific structures in the present disclosure. In the description of the present disclosure, unless otherwise expressly specified, the terms "mount", "concatenate", and "connect" are understood in a broad sense. For example, a "connection" may be a fixed connection, a detachable connection, or an integrated connection, and may be a direct connection or an indirect connection implemented through an intermediary. A person of ordinary skill in the art can understand the specific meanings of the terms in the present disclosure according to specific situations.

**In** a process of developing the present disclosure, the inventor hereof finds that an internal short circuit is prone to occur near end regions of a positive electrode plate and a negative electrode plate after expansion of a battery cell in use for the following reasons:

**If** the burrs in the end region of an electrode plate are not removed, an electrode assembly serving as a core component of the battery cell expands during the use of the battery, and the burrs in the end region of the electrode plate are prone to pierce the separator. Consequently, this may cause the positive electrode plate and the negative electrode plate to be connected by the burrs, lead to an internal short circuit in the battery, and cause a safety accident.

Therefore, the present disclosure provides an electrode plate assembly. A protection layer is disposed at an end region of an electrode body of an electrode to cover a main end face of the end region and surfaces adjacent to the main end face. The protection layer wraps the burrs in the end region, and prevents the burrs from piercing the separator, thereby preventing an internal short circuit from occurring in the electrode body and improving the safety performance of the electrode plate. Further, the present disclosure further provides an electrode assembly containing the electrode plate assembly, a battery cell containing the electrode assembly, a battery containing the battery cell, and an electrical device containing the battery.

An embodiment of the present disclosure provides an electrical device that uses a battery as a power supply. The battery is configured to supply electrical energy for the electrical device. The electrical device may be, but is not limited to, a mobile phone, a portable device, a laptop computer, an electric power cart, an electric vehicle, a ship, a spacecraft, an electric toy, an electric tool, or the like. For example, the types of the spacecraft include an airplane, a rocket, a space shuttle, a spaceship, and the like. The types of the electric toy include a stationary electric toy or a mobile electric toy, such as a game console, an electric car toy, an electric ship toy, and an electric airplane toy. The types of the electric tool include an electrical metal cutting tool, an electrical grinding tool, an electrical assembling tool, or an electric tool for use in railways. Examples of the electric tool are an electrical drill, an electrical grinding wheel machine, an electrical wrench, an electrical screwdriver, an electrical hammer, an electrical impact drill, a concrete vibrator, and an electrical planer.

**In** the present disclosure, the types of the battery cell may include a lithium-ion secondary battery, a lithium-ion primary battery, a lithium-sulfur battery, a sodium-lithium-ion battery, a sodium-ion battery, a magnesium-ion battery, or the like. The type of the battery cell is not limited herein. The battery cell may be cylindrical, cuboidal, or in a flat shape or another shape. The shape of the battery cell is not limited herein. Depending on the form of packaging, the battery cell is typically classed into three types: cylindrical cell, prismatic cell, and pouch-type cell. The packaging form of the battery cell is not limited herein.

The battery mentioned in an embodiment of the present disclosure means a unitary physical module that includes one or more battery cells to provide a higher voltage and a higher capacity. For example, the battery mentioned in the present disclosure may include a battery module, a battery pack, or the like. A battery typically includes a box configured to package one or more battery cells. The box prevents liquid or other foreign matters from affecting the charging or discharging of the battery cells.

A battery cell primarily includes an electrode assembly and an electrolyte solution. The electrode assembly primarily includes a positive electrode plate, a negative electrode plate, and a separator. The battery cell works primarily by shuttling metal ions between the positive electrode plate and the negative electrode plate. The positive electrode plate includes a positive current collector and a positive active material layer. The positive active material layer is applied onto a surface of the positive current collector. Of the positive current collector, a part uncoated with the positive active material layer protrudes from a part coated with the positive active material layer. The part, uncoated with the positive active material layer, of the positive current collector, serves as a positive tab. The positive active material layer and the positive current collector coated with the positive active material layer constitute an electrode plate body of the positive electrode plate. Using a lithium-ion battery as an example, the positive current collector may be made of aluminum, and a positive active material may be lithium cobalt oxide, lithium iron phosphate, ternary lithium, lithium manganese oxide, or the like. The negative electrode plate includes a negative current collector and a negative active material layer. The negative active material layer is applied onto a surface of the negative current collector. Of the negative current collector, a part uncoated with the negative active material layer protrudes from a part coated with the negative active material layer. The part, uncoated with the negative active material layer, of the negative current collector, serves as a negative tab. The negative active material layer and the negative current collector coated with the negative active material layer constitute an electrode plate body of the negative electrode plate. The negative current collector may be made of copper, and a negative active material may be carbon, silicon, or the like. To prevent a large electrical current from tripping the circuit, a plurality of positive tabs are typically disposed and stacked together, and a plurality of negative tabs are typically disposed and stacked together. The separator may be made of a material such as polypropylene (polypropylene, PP) or polyethylene (polyethylene, PE).

Using a vehicle D as an example of the electrical device, the electrical device disclosed in some embodiments of the present disclosure and a battery contained in the electrical device are described below.

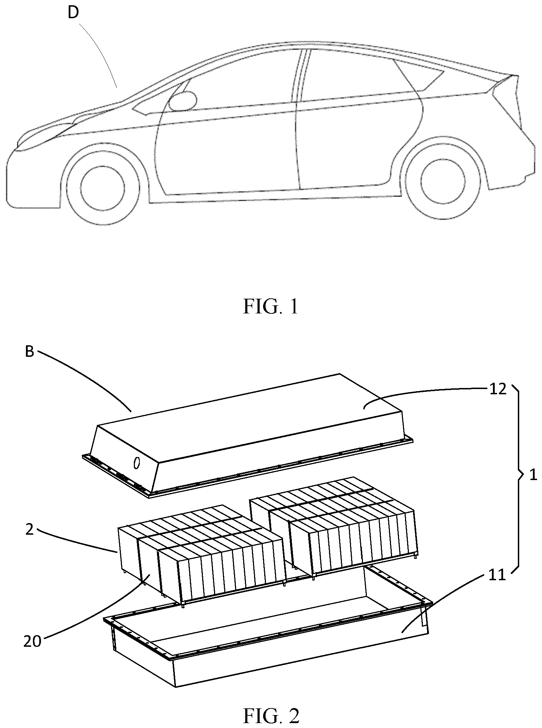

Referring to FIG. 1, FIG. 1 is a schematic structural diagram of a vehicle D according to some embodiments of the present disclosure. The vehicle D may be an oil-fueled vehicle, a natural gas vehicle, or a new energy vehicle. The new energy vehicle may be a battery electric vehicle, a hybrid electric vehicle, a range-extended electric vehicle, or the like. A battery B is disposed inside the vehicle D. The battery B may be disposed at the bottom, front, or rear of the vehicle D. The battery B may be configured to provide electrical energy for the vehicle D, for example, may serve as an operating power supply of the vehicle D.

In some embodiments of the present disclosure, the battery B serves not only as an operating power supply of the vehicle D, but also as a driving power supply of the vehicle D to provide driving power for the vehicle D in place of or partially in place of fuel oil or natural gas.

Referring to FIG. 2, FIG. 2 is an exploded view of a battery B according to some embodiments of the present disclosure.

The battery B includes a box 1 and a battery cell 20 accommodated in the box 1. The box 1 includes a shell 11 and a cover 12 snap-fitted onto the shell 11. The box 1 is configured to provide an accommodation space for the battery cell 20. In the above embodiment, the entire box 1 is cuboidal. In an embodiment not shown in the drawings, the box 1 may be in another shape such as a cylinder.

If the battery B includes a plurality of battery cells 20, the plurality of battery cells 20 may be connected in series, parallel, or series-and-parallel pattern. The series-and-parallel pattern means a combination of series connection and parallel connection of the plurality of battery cells 20. The plurality of battery cells 20 may be directly connected in series, parallel, or series-and-parallel pattern, and then the whole of the plurality of battery cells 20 may be accommodated in the box 1.

As shown in FIG. 2, the battery B may a battery pack 2 formed by connecting a plurality of battery cells 20 in series, parallel, or series-and-parallel pattern first. The battery pack 2 may be in the form of a battery module. A plurality of battery packs 2 are then connected in series, parallel, or series-and-parallel pattern to form a whole, and are accommodated in the box 1. The battery B may further include other structures. For example, the battery B may further include a busbar component configured to implement electrical connection between the plurality of battery cells 20.

A battery cell primarily includes a battery core, a housing, and an end cap assembly. The battery core may include one, two or more electrode assemblies. The battery core is packaged in the accommodation space of the housing through an end cap in the end cap assembly, and the accommodation space is filled with an electrolyte solution. The electrode assembly is disposed in the accommodation space of the housing. The electrode assembly is a component that reacts electrochemically in the battery cell.

The electrode assembly may assume a jelly-roll structure. The electrode assembly is formed by stacking the strip-shaped positive electrode plate, separator, and negative electrode plate sequentially and then winding the stacked structure for at least two coils. The electrode assembly may be in a flat shape. During preparation of the electrode assembly, the electrode assembly may be directly wound into a flat shape so that the electrode assembly is roughly hexahedral; or may be wound into a hollow cylindrical structure first and then flattened into a flat shape. The flattened face is approximately parallel to a winding axis and is an outer surface with the largest area. The flattened face may be a surface that is relatively flat, but not necessarily exactly planar.

The electrode assembly may assume a stacked structure instead. To be specific, the electrode assembly contains a plurality of positive electrode plates and a plurality of negative electrode plates, and a separator is disposed between a positive electrode plate and a negative electrode plate. The positive electrode plates and the negative electrode plates are stacked.

The housing is a component configured to provide an accommodation space for accommodating the electrode assembly, an electrolytic solution, and other components. The housing may vary in shape and size. For example, the housing is cuboidal, cylindrical, hexagonal prismatic, or the like. Specifically, the shape of the housing may be determined depending on the specific shape and size of the electrode assembly. The material of the housing may be copper, iron, aluminum, stainless steel, aluminum alloy, or plastic.

The end cap is a component that fits and covers the opening of the housing to isolate the internal environment of the battery cell from the external environment. The shape of the end cap may be adapted to the shape of the housing to fit the housing. Optionally, the end cap may be made of a material of appropriate hardness and strength (such as aluminum alloy), so that the end cap is not prone to deform when squeezed or impacted. In this way, the battery cell achieves higher structural strength and higher safety performance. Functional components such as electrode terminals may be disposed on the end cap. The electrode terminals may be configured to be electrically connected to the electrode assembly to output or input electrical energy of the battery cell. In some embodiments, the end cap may be equipped with a pressure relief mechanism configured to release an internal pressure when the internal pressure or temperature of the battery cell reaches a threshold. The pressure relief mechanism is an explosion-proof valve, for example. The end cap may be made of a variety of materials such as copper, iron, aluminum, stainless steel, aluminum alloy, or plastic. The material of the end cap is not limited herein.

The housing and the end cap may be stand-alone components. An opening is created on the housing. At the opening, the end cap fits the opening to form an internal environment of the battery cell. Not restrictively, the end cap and the housing may be integrated. Specifically, the end cap and the housing may form a common connection face first before other components are put into the housing. When the housing needs to be sealed, the end cap is caused to fit the housing so that the housing and the end cap are sealed in one piece.

**In** a battery cell in some embodiments, an insulator may be further disposed on an inner side of the end cap. The insulator may be configured to isolate an electrically connected component in the housing from the end cap to reduce short-circuit risks. As an example, the insulator may be an insulation plate, and may be made of a material such as plastic or rubber.

An end cap assembly is formed by the end cap and the components such as electrode terminals, explosion-proof valves, and insulation plate disposed on the end cap.

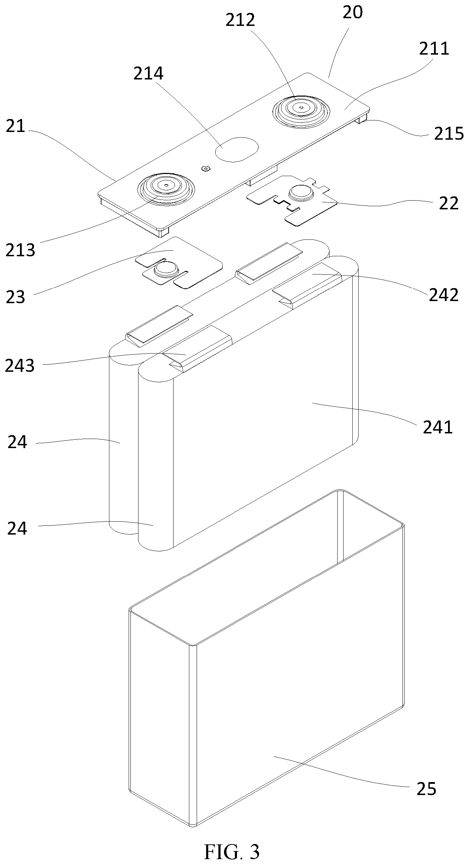

Referring to FIG. 3, FIG. 3 is a schematic exploded view of a battery cell according to an embodiment of the present disclosure. The battery cell 20 in this embodiment of the present disclosure includes an end cap assembly 21, a housing 22, and a battery core. The battery core includes two electrode assemblies 24.

The end cap assembly 21 includes an end cap 211, a positive terminal 212, a negative terminal 213, an explosion-proof valve 214, and an insulation plate 215. The end cap 211 is configured to fit the housing 22 to package the battery core in a hermetic accommodation space formed by the end cap 211 and the housing 22. The positive terminal 212 and the negative terminal 213 may be electrically connected to a positive tab 242 and a negative tab 243 of the corresponding electrode assembly 24 by a positive connecting strip 22 and a negative connecting strip 23 respectively. The insulation plate 215 is arranged between the end cap 211 and the positive connecting strip 22 and the negative connecting strip 23, and is configured to insulate the end cap 211 from the positive connecting strip 22 and the negative connecting strip 23, and implement insulation between different electrode assemblies 24.

The electrode assembly 24 includes an electrode assembly body 241, a positive tab 242, and a negative tab 243. The electrode assembly 24 includes an electrode plate assembly 30 disclosed in an embodiment of the present disclosure.

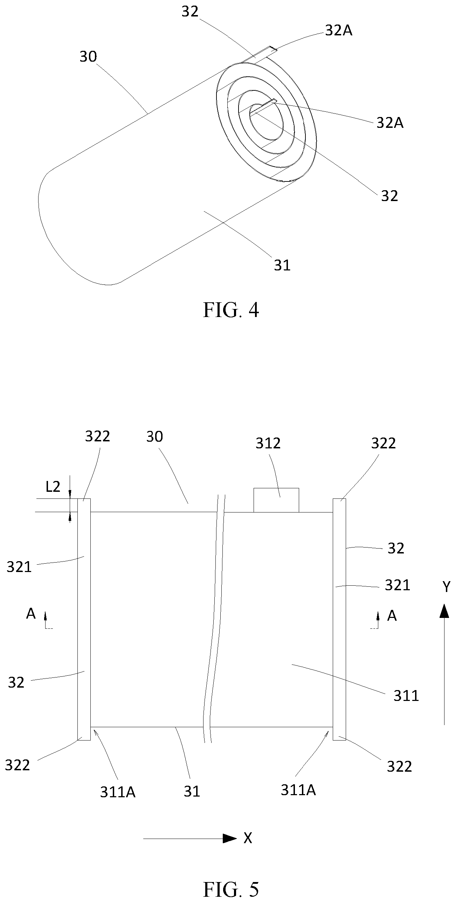

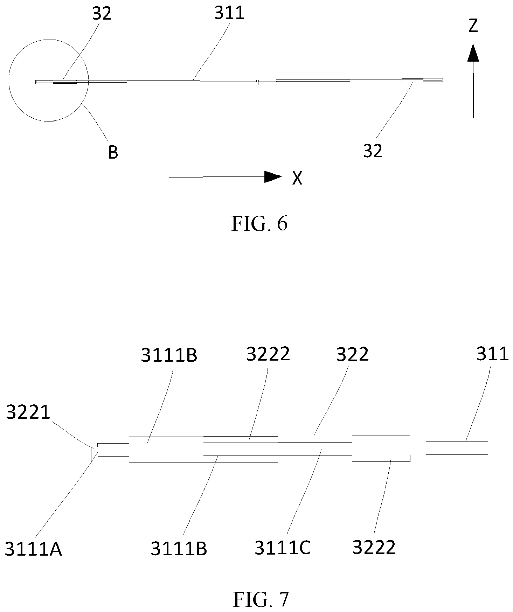

The following describes the electrode plate assembly 30 in an embodiment of the present disclosure with reference to FIG. 4 to FIG. 13.

As shown in FIG. 4 to FIG. 13, the electrode plate assembly 30 in this embodiment of the present disclosure includes an electrode plate 31 and a protection layer 32. The electrode plate 31 includes an electrode plate body 311. The electrode plate body 311 includes an end region 311A. The protection layer 32 is fixed onto the electrode plate body 311, and includes a protection layer body section 321 that covers the end region 311A along an extension direction of the end region 311A. The protection layer body section 321 includes a main end face body protection portion 3211 and two lateral face body protection portions 3212 connected respectively to two sides of the main end face body protection portion 3211. The main end face body protection portion 3211 covers a main end face 3111A of the end region 311A. Each of the lateral face body protection portions 3212 extends from the main end face 3111A of the end region 311A to an inner side of the electrode plate body 311 and covers a lateral face 3111B of the end region 311A, the lateral face being close to the main end face 3111A.

The electrode plate body 311 may include one, two, or more end regions 311A. In the embodiment shown in FIG. 4 to FIG. 9, the electrode plate body 311 includes two end regions 311A located at two ends of the electrode plate body 311 in a length direction (X direction in FIG. 5). Extension directions of the end regions 311A are consistent with a width direction (Y direction in FIG. 5) of the electrode plate body 311. The electrode plate assembly 30 in an embodiment of the present disclosure is applicable to a secondary battery.

**In** the electrode plate assembly 30 in an embodiment of the present disclosure, a protection layer 32 fixed onto the electrode plate body 311 is disposed in the end region 311A of the electrode plate 31 of the electrode plate assembly 30. The protection layer 32 includes a protection layer body section 321 that covers the end region 311A along the extension direction of the end region 311A. The main end face body protection portion 3211 and the two lateral face body protection portions 3212 of the protection layer 32 can wrap the main end face 3111A and the lateral faces 3111B of the end region 311A, thereby isolating burrs in the end region 311A of the electrode plate body 311 from the separator, reducing the phenomena that the burrs at the end region 311A pierce the separator, and in turn, reducing internal short circuits between the positive electrode plate body and the negative electrode plate body caused by the pierced separator, and improving safety performance of the electrode assembly, the battery cell, the battery, and the electrical device that each contain the electrode plate assembly 30.

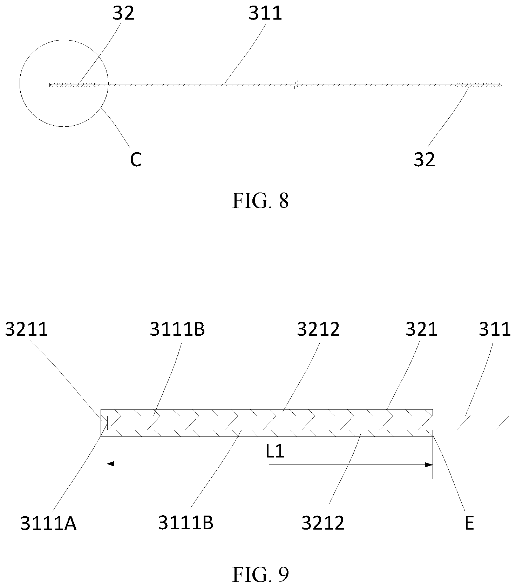

In an electrode plate assembly 30 in some embodiments, as shown in FIG. 9, a maximum distance L1 from an edge E of the lateral face body protection portion 3212 to the main end face 3111A of the end region 311A is 2 mm to 100 mm, the edge E being located inside the main end face 3111A of the end region 311A. The maximum distance L1 is, for example, 3 mm, 5 mm, 16 mm, 30 mm, 45 mm, 60 mm, 75 mm, 95 mm, or the like.

Two beneficial effects are achieved by setting a reasonable maximum distance L1 from the edge E of the lateral face body protection portion 3212 to the main end face 3111A of the end region 311A, where the edge E is located inside the main end face 3111A of the end region 311A. One beneficial effect is to achieve a reasonable contact area between the protection layer 32 and the lateral face 3111B of the end region, ensure sufficient bonding strength of the protection layer 32 to the main end face 3111A and the lateral faces 3111B of the end region 311A, and prevent the protection layer 32 from partially or fully falling off and impairing the protection effect. The other beneficial effect is to limit the coverage area of the protection layer 32 covering the lateral face 3111B of the end region, and limit the loss of the battery capacity caused by the disposed protection layer 32.

In an electrode plate assembly 30 in some embodiments, as shown in FIG. 4 to FIG. 14, the protection layer 32 includes adhesive tape 320 affixed to the electrode plate body 311.

The protection layer 32 is made of the adhesive tape 320. The adhesive tape 320 is easy to prepare, and the shape and size of the adhesive tape can easily meet design requirements. The adhesive tape 320 may be prepared before being assembled with the electrode plate body 311. The adhesive tape 320 is easy to assemble with the electrode plate body 311. The position at which the adhesive tape 320 is assembled onto the electrode plate body 311 is easy to control, thereby achieving relatively high processing efficiency of the electrode plate assembly 30, and bringing little impact on the production process of the electrode assembly.

The adhesive tape 320 may be made of a main material such as polyethylene (polyethylene, PE) or polypropylene (polypropylene, PP).

In an embodiment not shown in the drawing, the protection layer may be formed in various ways. For example, the protection layer may be directly fixed as a strip-shaped sheet material to the end region of the electrode plate body by gluing or hot pressing, or the protection layer may be formed by coating the end region of the electrode plate body with a protection material.

In an electrode plate assembly 30 in some embodiments, maximum distances L1 from edges E of the two lateral face body protection portions 3212 to the main end face 3111A of the end region 311A are equal, the edges E being located inside the main end face 3111A of the end region 311A.

By equalizing the maximum distances L1 from the edges E of the two lateral face body protection portions 3212 to the main end face 3111A of the end region 311A, where the edges E are located inside the main end face 3111A of the end region 311A, the contact areas between the two lateral face body protection portions 3212 and the lateral faces 3111B of the end region 311A can be conveniently caused to fall within a reasonable range, thereby ensuring sufficient bonding strength of the protection layer 32 to the main end face 3111A and the two lateral faces 3111B of the end region 311A. The bonding strength of the protection layer 32 to the two lateral faces 3111B is approximately equalized, thereby reducing the probability that a single side of the protection layer is detached and then the entire protection layer 32 falls off gradually due to the single-side detachment, and ensuring a good protection effect of the protection layer 32. The approximately equalized bonding strength further equalizes the coverage areas of the two lateral face body protection portions 3212 covering the lateral faces 3111B of the end region 311A, reduces the probability that one side covers a much larger area of the lateral face 3111B of the end region 311A than the other side, and in turn, reduces the impact caused by the disposed protection layer 32 onto the battery capacity.

In the electrode plate assembly 30 in some embodiments, the two lateral face body protection portions 3212 are disposed symmetrically with respect to a thickness direction (Z direction in FIG. 8) of the electrode plate 31.

By disposing the two lateral face body protection portions 3212 symmetrically with respect to the thickness direction of the electrode plate 31, the contact areas between the two lateral face body protection portions 3212 and the lateral faces 3111B of the end region are conveniently caused to fall within a reasonable range and be relatively consistent, thereby ensuring reasonable and approximately equalized bonding strength of the protection layer 32 to the main end face 3111A and the two lateral faces 3111B of the end region. The approximately equalized bonding strength of the protection layer to the two lateral faces reduces the probability that a single side of the protection layer is detached and then the entire protection layer 32 falls off gradually due to the single-side detachment, and ensures a good protection effect of the protection layer 32. The approximately equalized bonding strength further equalizes the coverage areas of the two lateral face body protection portions 3212 covering the lateral faces 3111B of the end region 311A, reduces the probability that one side covers a much larger area of the lateral face 3111B of the end region 311A than the other side, and in turn, reduces the impact caused by the disposed protection layer 32 onto the battery capacity.

In the electrode plate assembly 30 in some embodiments, an edge E of the lateral face body protection portion 3212, which is located inside the main end face 3111A of the end region 311A, is a straight line edge; or an edge E of the lateral face body protection portion 3212, which is located inside the main end face 3111A of the end region 311A, is a polygonal line edge; or an edge E of the lateral face body protection portion 3212, which is located inside the main end face 3111A of the end region 311A, is a curve edge; or an edge E of the lateral face body protection portion 3212, which is located inside the main end face 3111A of the end region 311A, is a combined edge that includes a straight line edge and a curve edge.

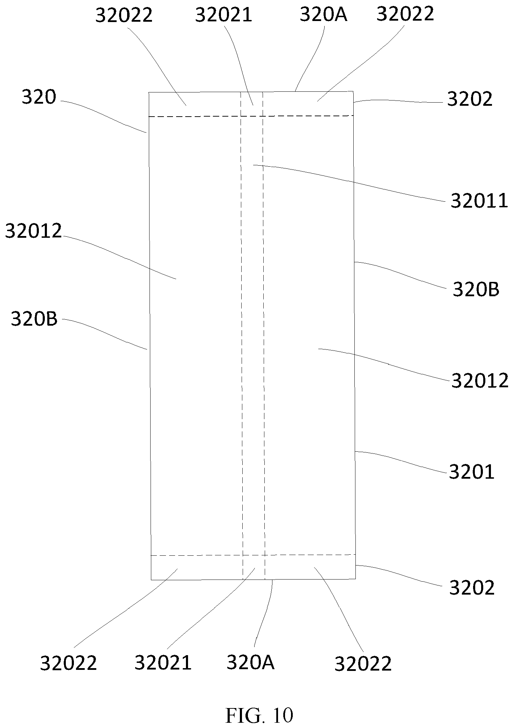

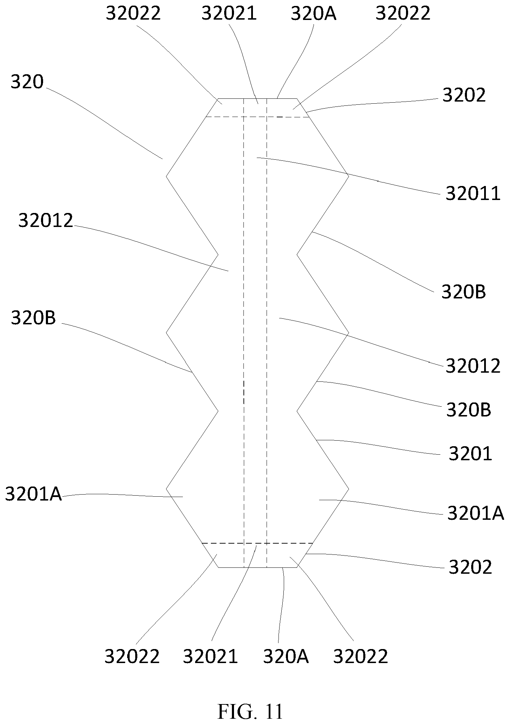

FIG. 10 to FIG. 14 show different shapes of the adhesive tape 320 applicable when the electrode plate assembly 30 is made by using the adhesive tape 320 as a material of the protection layer 32. FIG. 10 shows a shape of the adhesive tape 320 used for manufacturing the electrode plate assembly 30 in the embodiments shown in FIG. 4 to FIG. 9. FIG. 11 to FIG. 14 show several different embodiments of the adhesive tape 320 in place of the embodiments shown in FIG. 4 to FIG. 10.

In FIG. 10 to FIG. 14, the shape of the adhesive tape 320 is formed by an upper contour line and a lower contour line 320A as well as a left contour line and a right contour line 320B. In the adhesive tape 320 in each embodiment shown in FIG. 10 to FIG. 14, the upper and lower contour lines 320A are arranged symmetrically in an up-down direction, and the left and right contour lines 320B are arranged symmetrically in a left-right direction. The dashed lines in FIG. 10 to FIG. 14 represent intersection lines between the adhesive tape and the main end face 3111A, the lateral faces 3111B, and the lateral end face of the end region 311A after the adhesive tape 320 is affixed onto the electrode body 311, and extension parts of the intersection lines. After the adhesive tape 320 is assembled with the electrode body 311, the transverse direction in FIG. 10 to FIG. 14, that is, the left-right direction, is consistent with the length direction of the electrode body 311 shown in FIG. 4 to FIG. 9, that is, the X direction; the longitudinal direction in FIG. 10 to FIG. 14, that is, the up-down direction, is consistent with the width direction of the electrode body 311 shown in FIG. 4 to FIG. 9, that is, the Y direction; and, the thickness direction (a direction perpendicular to the paper) of the adhesive tape 10 in FIG. 10 to FIG. 14 is consistent with the thickness direction Z of the electrode body 311 shown in FIG. 4 to FIG. 9.

The following describes different shapes of the lateral face body protection portion 3212 corresponding to different shapes of the adhesive tape 320.

As shown in FIG. 10 to FIG. 14, a central tape section 3201 located between upper and lower transverse dashed lines constitutes a protection layer body section 321 of the protection layer 32 after the adhesive tape 320 is assembled with the electrode body 311. A first central tape portion 32011 demarcated by two longitudinal dashed lines and located on the central tape section 3201 constitutes a main end face body protection portion 3211 of the protection layer body section 321 of the protection layer 32 after the adhesive tape 320 is assembled with the electrode body 311. Two first outer tape portions 32012 located on two transverse sides of the first central tape portion 32011 of the central tape section 3201 constitute two lateral face body protection portions 3212 of the protection layer body section 321 of the protection layer 32 after the adhesive tape 320 is assembled with the electrode body 311. In FIG. 10 to FIG. 14, a part of the left and right edges 320B of the adhesive tape 320, which is located between the upper and lower dashed lines, constitutes the edge E of the lateral face body protection portion 3212 after the adhesive tape 320 is assembled with the electrode body 311, the edge E being located inside the main end face 3111A of the end region 311A.

As shown in FIG. 10, the part of the left and right edges 320B of the adhesive tape 320, which is located between the upper and lower dashed lines, is a straight line edge. In other words, after the adhesive tape 320 is assembled with the electrode body 311, the edge E of the lateral face body protection portion 3212, which is located inside the main end face 3111A of the end region 311A, is a straight line edge.

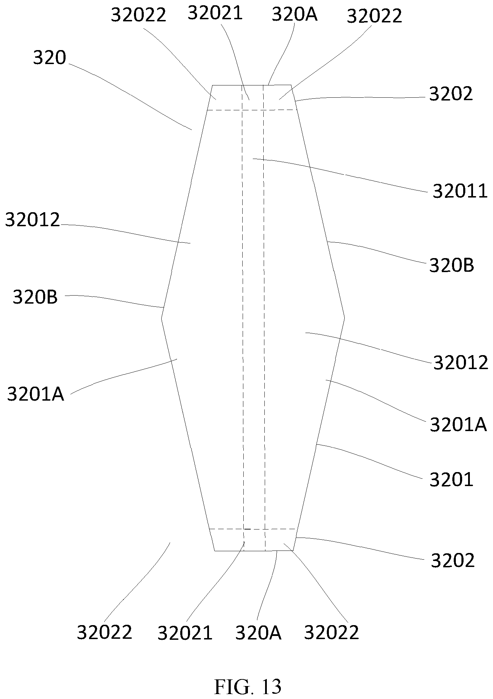

As shown in FIG. 11 and FIG. 13, the part of the left and right edges 320B of the adhesive tape 320, which is located between the upper and lower dashed lines, is a polygonal line edge. In other words, after the adhesive tape 320 is assembled with the electrode body 311, the edge E of the lateral face body protection portion 3212, which is located inside the main end face 3111A of the end region 311A, is a polygonal line edge. The polygonal line edge includes a plurality of straight line edges connected in sequence. In the embodiment shown in FIG. 11, the number of straight line edges included in the polygonal line edge is six. In the embodiment shown in FIG. 13, the number of straight line edges included in the polygonal line edge is two.

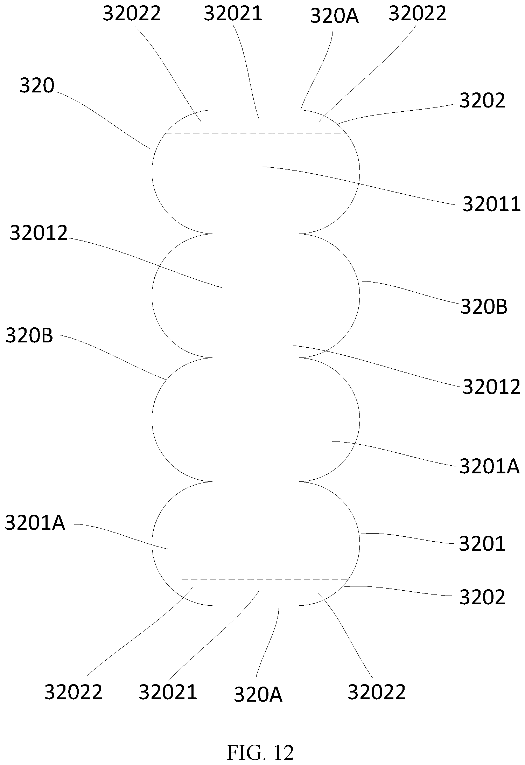

As shown in FIG. 12, the part of the left and right edges 320B of the adhesive tape 320, which is located between the upper and lower dashed lines, is a curve edge. In other words, after the adhesive tape 320 is assembled with the electrode body 311, the edge E of the lateral face body protection portion 3212, which is located inside the main end face 3111A of the end region 311A, is a curve edge. The curve edge includes a plurality of convex curve edges connected in sequence. In the embodiment shown in FIG. 12, the number of convex curve edges included in the curve edge is four.

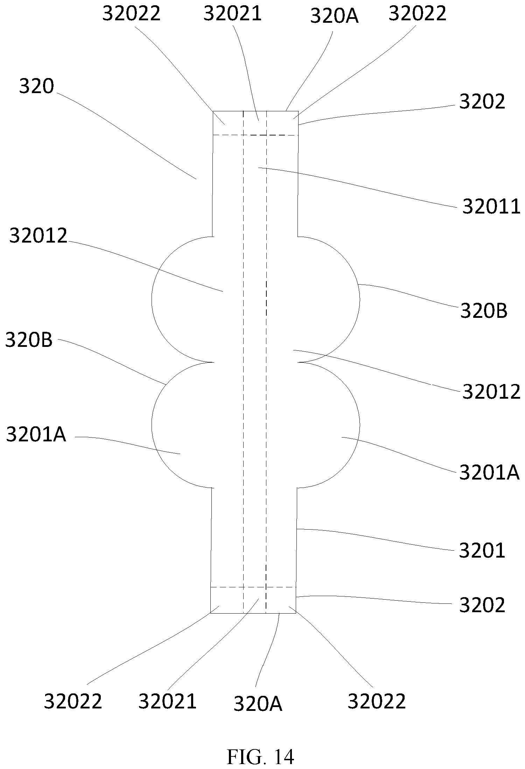

As shown in FIG. 14, the part of the left and right edges 320B of the adhesive tape 320, which is located between the upper and lower dashed lines, is a combined edge that includes a straight line edge and a curve edge. In other words, after the adhesive tape 320 is assembled with the electrode body 311, the edge E of the lateral face body protection portion 3212, which is located inside the main end face 3111A of the end region 311A, is a combined edge that includes a straight line edge and a curve edge. The combined edge includes two straight line edges located on the upper side and the lower side as well as two convex curve edges connected in sequence in the middle.

When the edge E of the lateral face body protection portion 3212, which is located inside the main end face 3111A of the end region 311A, is a straight line edge, it is convenient to process and manufacture the protection layer 32 and the electrode plate assembly 30, and the risk of damaging the protection layer 32 is reduced. When the edge E of the lateral face body protection portion 3212, which is located inside the main end face 3111A of the end region 311A, is a polygonal line edge, a curve edge, or a combined edge that includes a straight line edge and a curve edge, a sufficient bonding area between the protection layer 32 and the electrode plate body 311 is ensured so as to ensure sufficient bonding strength between the protection layer 32 and the electrode plate body 311. At the same time, the coverage area of the protection layer 32 covering the electrode plate body 311 is minimized, and the impact caused by the disposed protection layer 32 onto the battery capacity is reduced.

**In** the electrode plate assembly 30 in some embodiments, as shown in FIG. 10 to FIG. 14, the lateral face body protection portion 3212 is rectangular; or at least one protruding portion that protrudes away from the main end face 3111A is included in the lateral face body protection portion 3212 on an edge side located inside the main end face 3111A of the end region 311A.

When the lateral face body protection portion 3212 is set to be rectangular, it is convenient to process and manufacture the protection layer 32 and the electrode plate assembly 30, the risk of damaging the protection layer 32 is reduced, and the impact caused by the protection layer 32 onto the electrode plate body 311 is more consistent along the extension direction of the end region 311A. When at least one protruding portion that protrudes away from the main end face 3111A is included in the lateral face body protection portion 3212 on an edge side located inside the main end face 3111A of the end region 311A, a sufficient bonding area between the protection layer 32 and the electrode plate body 311 is ensured so as to ensure sufficient bonding strength between the protection layer 32 and the electrode plate body 311. At the same time, the coverage area of the protection layer 32 covering the electrode plate body 311 is minimized, and the impact caused by the disposed protection layer 32 onto the battery capacity is reduced.

As shown in FIG. 10, the first outer tape portion 32012 corresponding to the lateral face body protection portion 3212 is rectangular. In other words, after the adhesive tape 320 is assembled with the electrode body 311, the lateral face body protection portion 3212 is rectangular.

As shown in FIG. 11 to FIG. 14, the first outer tape portion 32012 corresponding to the lateral face body protection portion 3212 includes at least one protruding portion 3201A that protrudes outward transversely from the longitudinal dashed line. In other words, after the adhesive tape 320 is assembled with the electrode body 311, at least one protruding portion that protrudes away from the main end face 3111A is disposed in the lateral face body protection portion 3212 on an edge side located inside the main end face 3111A of the end region 311A. In the embodiment shown in FIG. 11, three protruding portions are disposed in each lateral face body protection portion 3212 correspondingly. In the embodiment shown in FIG. 12, four protruding portions are disposed in each lateral face body protection portion 3212 correspondingly. In the embodiment shown in FIG. 13, one protruding portion is disposed in each lateral face body protection portion 3212 correspondingly. In the embodiment shown in FIG. 14, two protruding portions are disposed in each lateral face body protection portion 3212 correspondingly.

**In** the electrode plate assembly 30 in some embodiments, as shown in FIG. 11 to FIG. 14, an edge of the protruding portion 3201A on a protruding side is a polygonal line edge or a curve edge.

When the edge of the protruding portion 3201A on the protruding side is set to be a polygonal line edge or a curve edge, a sufficient bonding area between the protection layer 32 and the electrode plate body 311 is ensured so as to ensure sufficient bonding strength between the protection layer 32 and the electrode plate body 311. At the same time, the coverage area of the protection layer 32 covering the electrode plate body 311 is minimized, and the impact caused by the disposed protection layer 32 onto the battery capacity is reduced.

As shown in FIG. 11 and FIG. 13, the protruding-side edge of the protruding portion 3201A included in the first outer tape portion 32012 corresponding to the lateral face body protection portion 3212 is a polygonal line edge. In other words, after the adhesive tape 320 is assembled with the electrode body 311, the protruding-side edge of the protruding portion of the lateral face body protection portion 3212 is a polygonal line edge. The polygonal line edge of each protruding portion may include two, three or more straight line edges.

As shown in FIG. 12 and FIG. 14, the protruding-side edge of the protruding portion 3201A included in the first outer tape portion 32012 corresponding to the lateral face body protection portion 3212 is a curve edge. In other words, after the adhesive tape 320 is assembled with the electrode body 311, the protruding-side edge of the protruding portion of the lateral face body protection portion 3212 is a curve edge. The shape of the curve edge of each protruding portion may be, for example, an arc, a parabola, or a hyperbola.

In the electrode plate assembly 30 in some embodiments, as shown in FIG. 11, FIG. 12, and FIG. 14, the lateral face body protection portion 3212 includes a plurality of protruding portions connected sequentially along the extension direction of the end region 311A.

When the edge of the protruding portion on the protruding side is set to be a polygonal line edge or a curve edge, a sufficient bonding area between the protection layer 32 and the electrode plate body 311 is ensured so as to ensure sufficient bonding strength between the protection layer 32 and the electrode plate body 311. At the same time, the coverage area of the protection layer 32 covering the electrode plate body is minimized, and the impact caused by the disposed protection layer onto the battery capacity is reduced.

When the adhesive tape 320 in the embodiment shown in FIG. 11 is applied to the electrode assembly 30, three protruding portions connected in sequence and containing a polygonal line edge are disposed in each lateral face body protection portion 3212 correspondingly. When the adhesive tape 320 in the embodiment shown in FIG. 12 is applied to the electrode assembly 30, four protruding portions connected in sequence and containing a curve edge are disposed in each lateral face body protection portion 3212 correspondingly. When the adhesive tape 320 in the embodiment shown in FIG. 14 is applied to the electrode assembly 30, two protruding portions connected in sequence and containing a curve edge are disposed in each lateral face body protection portion 3212 correspondingly.

In the electrode plate assembly 30 in some embodiments, at least two of the plurality of protruding portions of the lateral face body protection portion 3212 are at least partially identical in shape and size.

As shown in FIG. 11, FIG. 12, and FIG. 14, at least two protruding portions 3201A of the plurality of protruding portions 3201A of the first outer tape portion 32012 of the adhesive tape 320 are at least partially identical in shape and size. Therefore, at least two of the plurality of protruding portions of the lateral face body protection portion 3212 formed by the first outer tape portion 32012 are at least partially identical in shape and size.

When the edge of the protruding portion on the protruding side is set to be a polygonal line edge or a curve edge, a sufficient bonding area between the protection layer 32 and the electrode plate body 311 is ensured so as to ensure sufficient bonding strength between the protection layer 32 and the electrode plate body 311. At the same time, the coverage area of the protection layer 32 covering the electrode plate body is minimized, and the impact caused by the disposed protection layer onto the battery capacity is reduced.

In the above description about the lateral face body protection portion 3212, although the protection layer 32 is made of adhesive tape 320 as an example with reference to FIG. 10 to FIG. 14, the drawings of FIG. 10 to FIG. 14 may be deemed to be expanded drawings of the protection layer 32 formed by other means such as affixing or hot-pressing a strip-shape material or applying a protection material. Therefore, the above description about the lateral face body protection portion 3212 is also applicable to the protection layer 32 formed by other means.

In the electrode plate assembly 30 in some embodiments, as shown in FIG. 4 to FIG. 9, the main end face body protection portion 3211 is in fit with and connected to the main end face 3111A of the end region 311A of the electrode plate 31; and the lateral face body protection portion 3212 is in fit with and connected to the lateral face 3111B of the end region 311A, the lateral face being close to the main end face 3111A.

When the main end face body protection portion 3211 is caused to be in fit with and connected to the main end face 3111A of the end region 311A of the electrode plate 31, and the lateral face body protection portion 3212 is caused to be in fit with and connected to the lateral face 3111B of the end region 311A, the lateral face being close to the main end face 3111A, the bonding area between the protection layer 32 and the end region 311A is increased, thereby reducing the size of the protection layer 32 on the basis of ensuring sufficient bonding strength between the protection layer 32 and the electrode plate 31, reducing the space occupied by the protection layer 32, and saving the material of the protection layer 32. For example, the protection layer 32 may be in fit with and connected to a corresponding surface of the electrode plate body 311 by means such as bonding, hot-pressing, or coating.

In the embodiments shown in FIG. 4 to FIG. 9, a cross-section of the protection layer body section 321, which is perpendicular to the extension direction of the end region 311A, forms a U-shape. Each surface of the protection layer body section 321, which is oriented toward the electrode body 311, is combined with the electrode body 311.

In the electrode plate assembly 30 in some embodiments, as shown in FIG. 4 and FIG. 5, the protection layer 32 further includes a protection layer extension section 322 connected to an end portion of the protection layer body section 321, the end portion being disposed along the extension direction of the end region 311A.

Along the extension direction of the end region 311A, the protection layer extension section 322 is located outside the end region 311A. At least one end of the protection layer body section 321 along the extension direction of the end region 311A is connected to the protection layer extension section 322.

The disposed protection layer extension section 322 can protect the end portion disposed in the extension direction of the end region 311A and containing the protection layer extension section 322, prevent the burrs on the end portion from piercing the separator, and further reduce the phenomena that the burrs near the end region 311A pierce the separator, thereby further reducing internal short circuits between the positive electrode plate body and the negative electrode plate body caused by the pierced separator, and improving safety performance of the electrode assembly, the battery cell, the battery, and the electrical device that each contain the electrode plate assembly 30.

In the electrode plate assembly 30 in some embodiments, as shown in FIG. 4 and FIG. 5, along the extension direction of the end region 311A, a length L2 of the protection layer extension section 322 is less than or equal to 20 mm. The length L2 may be, for example, 3 mm, 6 mm, 8 mm, 15 mm, or 18 mm.

By setting the length L2 of the protection layer extension section 322 to be less than or equal to 20 mm, this application can protect the end portion disposed in the extension direction of the end region 311A and containing a protection layer extension section 322, and at the same time, prevent the electrode plate 31 from being locally stressed additionally due to touching the protection layer extension section 322 during further processing of the electrode plate assembly 30 or during assembling of the electrode assembly or battery cell containing the electrode plate assembly 30, and prevent the risk such as lithium plating caused by the resulting deformation of the electrode plate 31.

In the electrode plate assembly 30 in some embodiments, as shown in FIG. 5, along the extension direction of the end region 311A, two protection layer extension sections 322 are connected to two ends of the protection layer body section 321 respectively, and lengths L2 of the two protection layer extension sections 322 are equal.

The protection layer extension sections 322 disposed at both ends of the protection layer body section 321 can protect both end portions in the extension direction of the end region 311A, prevent the burrs at the two ends of the end region 311A from piercing the separator, and further reduce the phenomena that the burrs at the end region 311A pierce the separator, thereby further reducing internal short circuits between the positive electrode plate body and the negative electrode plate body caused by the pierced separator, and improving safety performance of the electrode assembly, the battery cell, the battery, and the electrical device that each contain the electrode plate assembly 30. By equalizing the lengths L2 of the two protection layer extension sections 322, this application can conveniently set the lengths L2 of the protection layer extension sections 322 at both ends to an appropriate length value, protect both ends in the extension direction of the end region 311A effectively, prevent the electrode plate 31 from being locally stressed additionally due to a protection layer extension section 322 stressed because of an improper length of the protection layer extension section 322 at one end, and prevent the risk such as lithium plating caused by the resulting deformation of the electrode plate 31.

In the electrode plate assembly 30 in some embodiments, as shown in FIG. 4 and FIG. 5, the protection layer extension section 322 includes a main end face extension protection portion 3221 toward an extension surface of the main end face 3111A of the end region 311A and a lateral face extension protection portion 3222 toward an extension surface of the lateral face 3111B of the end region 311A.

The protection layer extension section 322 is set to include a main end face extension protection portion 3221 and a lateral face extension protection portion 3222, thereby making it convenient to implement the same structural form for both the protection layer extension section 322 and the protection layer body section 321. When a strip-shaped material such as adhesive tape 320 is used as a main material to form the protection layer 32, the protection layer extension section 322 can be formed concomitantly during arrangement of the protection layer body section 321 without specially designing or processing the protection layer extension section 322, thereby improving the processing efficiency of the electrode plate assembly 30.

As shown in FIG. 4 to FIG. 14, the protection layer extension section 322 and the structure thereof are described below by using an example in which the protection layer 32 is made of the adhesive tape 320. As mentioned above, the dashed lines in FIG. 10 to FIG. 14 represent intersection lines between the adhesive tape 320 and the main end face 3111A, the lateral faces 3111B, and the lateral end face of the end region 311A after the adhesive tape 320 is affixed onto the electrode body 311, and extension parts of the intersection lines. The adhesive tape 320 is assembled with the electrode body 311 to form a protection layer 32. A central tape section 3201 located between upper and lower transverse dashed lines constitutes a protection layer body section 321 of the protection layer 32 after the adhesive tape 320 is assembled with the electrode body 311. Further, as shown in FIG. 10 to FIG. 14, the end tape section 3202 located on the upper and lower sides of the central tape section 3201 constitutes a protection layer extension section 321 of the protection layer 32 after the adhesive tape 320 is assembled with the electrode body 311. A second central tape portion 32021 located at a transverse central position on each end tape section 3202 constitutes a main end face extension protection portion 3211 of the protection layer extension section 321 after the adhesive tape 320 is assembled with the electrode body 311. Two second outer tape portions 32022 located on two transverse sides of the second central tape portion 32021 of each end tape section 3202 constitute lateral face extension protection portions 3222 of the protection layer extension section 321 after the adhesive tape 320 is assembled with the electrode body 311.

In some embodiments not shown in the drawings, the protection layer extension section 322 includes a lateral end face protection portion that covers a lateral end face 3111C of the end region 311A, the lateral end face being disposed along the extension direction of the end region 311A.

The protection layer extension section 322 is configured to include a lateral end face protection portion that covers a lateral end face 3111C of the end region 311A, so as to more effectively isolate the lateral end face 3111C from the separator, where the lateral end face is disposed along the extension direction of the end region 311A.

All such structural forms of the protection layer extension section 322 enable the protection layer extension section 322 to isolate the burrs in the corresponding end portion of the end region 311A from the separator, the end portion being disposed along the extension direction.

In the electrode plate assembly 30 in some embodiments, as shown in FIG. 4 and FIG. 5, at least one end region 311A is located at an end of the electrode plate 31 along a length direction X of the electrode plate body 311. The extension direction of the end region 311A is a width direction Y of the electrode plate body 311.

Generally, the electrode plate in a jelly-roll electrode assembly is wound around an axis parallel to the width direction. The end region 311A is located at an end of the electrode plate 31 along the length direction X of the electrode plate body 311. The extension direction of the end region 311A is the width direction Y of the electrode plate body 311. When the electrode plate assembly 30 is used as an electrode plate in a jelly-roll electrode assembly, the end region 311A is located at a radial inner end or a radial outer end of the jelly-roll electrode assembly. In this case, the protection layer 32 not only serves the function of preventing burrs from piercing the separator, but also serves a function of supporting the electrode assembly to some extent. Compared with a jelly-roll electrode assembly without a protection layer, the jelly-roll electrode assembly in an embodiment of the present disclosure is of higher strength, and can reduce the phenomena of collapse of the electrode assembly caused by insufficient strength, thereby further improving the safety performance of the jelly-roll electrode assembly and of the battery cell and the battery that each contain the jelly-roll electrode assembly.

In the embodiments shown in FIG. 4 to FIG. 9, the two end regions 311A are located at two ends of the electrode plate 31 along the length direction X of the electrode plate body 311. A corresponding protection layer 32 is disposed at each end region 311A. The extension direction of the end region 311A is the width direction Y of the electrode plate body 311. In other words, the protection layer 32 extends along the extension direction of the end region 311A, and protrudes outward for a specified distance from the two lateral end faces of the end region 311A, the two lateral end faces being disposed along the extension direction.

In the electrode plate assembly 30 in some embodiments, the electrode plate 31 is a positive electrode plate or a negative electrode plate.

The electrode plate 31 may be a positive electrode plate or a negative electrode plate. When the electrode plate 31 of the electrode plate assembly 30 is a positive electrode plate, the electrode plate assembly 30 forms a positive electrode plate assembly, and may be used for preparing the electrode assembly in place of a conventional positive electrode plate containing no protection layer. When the electrode plate 31 of the electrode plate assembly 30 is a negative electrode plate, the electrode plate assembly 30 forms a negative electrode plate assembly, and may be used for preparing the electrode assembly in place of a conventional negative electrode plate containing no protection layer.

The electrode plate body 311 includes a current collector of the electrode plate 31 and an active material layer on the current collector, where the current collector is coated with the active material layer. When the electrode plate 31 is a positive electrode plate, the electrode plate body 311 includes a positive current collector coated with a positive active material layer of the electrode plate 31 and a positive active material layer on the positive current collector. When the electrode plate 31 is a negative electrode plate, the electrode plate body 311 includes a negative current collector coated with a negative active material layer of the electrode plate 31 and a negative active material layer on the negative current collector.

The electrode plate 31 further includes a tab 312 connected to the current collector of the electrode plate body 311. A plurality of tabs 312 are disposed, and FIG. 5 shows just one of the tabs 312.

When an electrode assembly includes the electrode plate assembly 30, if the electrode assembly is a jelly-roll electrode assembly, after the electrode plate 31 is wound, the electrode plate body 311 is used as an integral part of an electrode assembly body 241 of the electrode assembly 24 shown in FIG. 3, and a plurality of tabs 312 are stacked to form a positive tab 242 (in a case that the electrode plate 31 is a positive electrode plate) or a negative tab 243 (in a case that the electrode plate 31 is a negative electrode plate) shown in FIG. 3.

When the electrode plate assembly 30 includes a positive electrode plate, the electrode plate assembly 30 may be used as a substitute for a conventional positive electrode plate to make an electrode assembly. In this case, the protection layer can prevent the burrs of the positive electrode plate from piercing the separator. When the electrode plate assembly 30 includes a negative electrode plate, the electrode plate assembly may be used as a substitute for a conventional negative electrode plate to make an electrode assembly. In this case, the protection layer can prevent the burrs of the negative electrode plate from piercing the separator. Therefore, no matter whether the electrode plate is a positive electrode plate or a negative electrode plate, the electrode plate assembly can improve the safety performance of the electrode assembly, the battery cell, the battery, and the electrical device that each contain the electrode plate assembly 30.

An embodiment of the present disclosure further provides an electrode assembly. The electrode assembly includes the electrode plate assembly 30 disclosed in an embodiment of the present disclosure.

The electrode assembly in an embodiment of the present disclosure possesses the advantages of the electrode plate assembly 30 disclosed in an embodiment of the present disclosure.

The electrode assembly may be a jelly-roll electrode assembly 24 shown in FIG. 3, for example.

**In** the electrode assembly in some embodiments, the electrode assembly is a jelly-roll electrode assembly, and the extension direction of the end region 311A of the electrode plate assembly 30 is parallel to an axis of the jelly-roll electrode assembly. The winding manner of the electrode plate assembly 30 shown in FIG. 4 corresponds to the winding manner of the electrode plate assembly 30 in the electrode assembly described in this embodiment.

The electrode assembly is a jelly-roll electrode assembly, the extension direction of the end region 311A of the electrode plate assembly 30 is set to be parallel to the axis of the jelly-roll electrode assembly, and the end region 311A is located at a radial inner end or a radial outer end of the jelly-roll electrode assembly. In this case, the protection layer 32 not only serves the function of preventing burrs from piercing the separator, but also serves a function of supporting the electrode assembly to some extent. Compared with a jelly-roll electrode assembly without a protection layer disposed at the end region of the electrode body, the jelly-roll electrode assembly in an embodiment of the present disclosure is of higher strength, and can reduce the phenomena of collapse of the electrode assembly caused by insufficient strength, thereby further improving the safety performance of the jelly-roll electrode assembly and of the battery cell and the battery that each contain the jelly-roll electrode assembly.

In an embodiment of the electrode assembly not shown in the drawing, the electrode plate assembly 30 in an embodiment of the present disclosure is also applicable to a stacked-type electrode assembly. When the electrode plate assembly 30 is applied in a stacked-type electrode assembly, similar to the circumstance in which the electrode plate assembly 30 is applied in a jelly-roll electrode assembly, the burrs on the main end face of the end region 311A and adjacent surfaces are not prone to pierce the separator because the main end face 3111A of the end region 311A of the electrode plate body 311 of the electrode plate assembly 30 and the adjacent surfaces are wrapped by the protection layer 32.

An embodiment of the present disclosure further provides a battery cell. The battery cell includes the electrode assembly disclosed in an embodiment of the present disclosure. The structural form of the battery cell is, for example, the battery cell 20 shown in FIG. 3. The electrode assembly 24 of the battery cell 20 is a jelly-roll electrode assembly containing the electrode plate assembly 30. A protection layer is disposed on the positive electrode plate of the electrode assembly 24 to form the electrode plate assembly 30. For other structures of the battery cell 20, reference may be made to the related descriptions above.

The battery cell in an embodiment of the present disclosure possesses the advantages of the electrode assembly disclosed in an embodiment of the present disclosure.

An embodiment of the present disclosure further provides a battery. The battery includes the battery cell disclosed in an embodiment of the present disclosure. The structural form of the battery is, for example, the battery B shown in FIG. 2. The battery B includes a plurality of battery cells 20 shown in FIG. 3. For other structures of the battery B, reference may be made to the related descriptions above.

The battery in an embodiment of the present disclosure possesses the advantages of the battery cell of the present disclosure.

An embodiment of the present disclosure further provides an electrical device. The electrical device includes the battery disclosed in an embodiment of the present disclosure. The battery is configured to provide electrical energy for the electrical device. The electrical device is, for example, the vehicle D shown in FIG. 1. The vehicle D includes the battery B shown in FIG. 2. For other structures of the battery B, reference may be made to the related descriptions above.

The electrical device in an embodiment of the present disclosure possesses the advantages of the battery cell disclosed in an embodiment of the present disclosure.

The following further describes the electrode assembly 30 in an embodiment of the present disclosure with reference to FIG. 4 to FIG. 14.

As shown in FIG. 4 to FIG. 10, the electrode plate assembly 30 includes an electrode plate 31 and a protection layer 32.

The electrode plate 31 includes an electrode plate body 311 and a plurality of tabs 312 connected to the electrode plate body 311. In FIG. 4, some tabs 312 are omitted in order to clearly show the relationship between the electrode plate body 311 and the protection layer 32. FIG. 5 shows just one tab 312 illustratively.

Each of two ends of the electrode plate body 311 along the length direction X of the electrode plate body includes an end region 311A. The extension directions of both end regions 311A are identical to the width direction Y of the electrode plate body 311.

A protection layer 32 is disposed on each end region 311A of the electrode plate body 311. Each protection layer 32 is made by affixing the adhesive tape 320 shown in FIG. 10 onto the end region 311A of the electrode plate body 311. The adhesive tape 320 is mainly made of a polyethylene material.

Each protection layer 32 includes a protection layer body section 321 covering the end region 311A along the extension direction of the corresponding end region 311A and two protection layer extension sections 322 connected respectively to two ends of the protection layer body section 321. The protection layer body section 321 is formed by the central tape section 3201 of the adhesive tape 320 shown in FIG. 10. The protection layer extension section 322 is formed by the end tape section 3202 of the adhesive tape 320 shown in FIG. 10.

The protection layer body section 321 includes a main end face body protection portion 3211 and two lateral face body protection portions 3212 connected respectively to two sides of the main end face body protection portion 3211. The main end face body protection portion 3211 covers the main end face 3111A of the end region 311A. Each of the lateral face body protection portions 3212 extends from the main end face 3111A of the end region 311A to an inner side of the electrode plate body 311 and covers a lateral face 3111B of the end region 311A, the lateral face being close to the main end face 3111A. The main end face body protection portion 3211 is formed by a first central tape portion 32011 of a central tape section 3201 shown in FIG. 10. The lateral face body protection portion 3212 is formed by a first outer tape portion 32012 shown in FIG. 10. A cross-section of the protection layer body section 321, which is perpendicular to the extension direction of the end region 311A, forms a U-shape.

As shown in FIG. 4 and FIG. 5, the protection layer extension section 322 includes a main end face extension protection portion 3221 toward an extension surface of the main end face 3111A of the end region 311A and a lateral face extension protection portion 3222 toward an extension surface of the lateral face 3111B of the end region 311A. The main end face extension protection portion 3221 is formed by a second central tape portion 32021 of the end tape section 3202 of the adhesive tape 320 shown in FIG. 10. The lateral face extension protection portion 3222 is formed by a second outer tape portion 32022 of the end tape section 3202 of the adhesive tape 320 shown in FIG. 10. Cross-sections of the protection layer extension section 322 and the protection layer body section 321, which are perpendicular to the extension direction of the end region 311A, are in the same shape and form a U-shape.

Maximum distances L1 from edges E of the two lateral face body protection portions 3212 to the main end face 3111A of the end region 311A are equal, the edges E being located inside the main end face 3111A of the end region 311A. The two lateral face body protection portions 3212 are disposed symmetrically with respect to a thickness direction Z of the electrode plate 31. The maximum distance L1 from the edge E of the lateral face body protection portion 3212 to the main end face 3111A of the end region 311A is 20 mm, the edge E being located inside the main end face 3111A of the end region 311A.

As shown in FIG. 10, the left and right edges 320B of the adhesive tape 320 are straight line edges. In this way, after the adhesive tape 320 is assembled with the electrode body 311, the edge E of the lateral face body protection portion 3212, which is located inside the main end face 3111A of the end region 311A, is a straight line edge. In addition, as shown in FIG. 4 to FIG. 10, the first outer tape portion 32012 corresponding to the lateral face body protection portion 3212 is rectangular. In this way, after the adhesive tape 320 is assembled with the electrode body 311, the lateral face body protection portion 3212 is rectangular.

As shown in FIG. 5, along the extension direction of the end region 311A, lengths L2 of the two protection layer extension sections 322 are equal. In this embodiment, the length L2 of the protection layer extension section 322 is equal to 10 mm.

FIG. 11 shows a substitute embodiment of the embodiment shown in FIG. 10.

The adhesive tape 320 in the embodiment shown in FIG. 11 differs from the adhesive tape 320 in the embodiment shown in FIG. 10 in that the left and right edges of the adhesive tape 320 in the embodiment shown in FIG. 11 are polygonal line edges. Each first outer tape portion 32012 includes three protruding portions 3201A. The protruding-side edge of each protruding portion 3201A is a polygonal line edge, and the shape of each protruding portion 3201A is a triangle.

After the adhesive tape 320 shown in FIG. 11 replaces the adhesive tape 320 in the embodiment shown in FIG. 10, an edge of the lateral face body protection portion 3212 of the electrode plate assembly 30 on a side away from the main end face 3111A is a polygonal line edge containing six straight line edges.

For the rest of the embodiment of the electrode plate assembly after the adhesive tape 320 shown in FIG. 11 replaces the adhesive tape 320 in the embodiments shown in FIG. 4 to FIG. 10, reference may be made to the relevant descriptions of the embodiments shown in FIG. 4 to FIG. 10.

FIG. 12 shows another substitute embodiment of the embodiment shown in FIG. 10.

The adhesive tape 320 in the embodiment shown in FIG. 12 differs from the adhesive tape 320 in the embodiment shown in FIG. 10 in that the left and right edges of the adhesive tape 320 in the embodiment shown in FIG. 12 are curve edges. Each first outer tape portion 32012 includes four protruding portions 3201A. The protruding-side edge of each protruding portion 3201A is a curve edge. The shape of each protruding portion 3201A is a semicircle.

After the adhesive tape 320 shown in FIG. 12 replaces the adhesive tape 320 in the embodiment shown in FIG. 10, an edge of the lateral face body protection portion 3212 of the electrode plate assembly 30 on a side away from the main end face 3111A is a curve edge containing four convex curve edges.

For the rest of the embodiment of the electrode plate assembly after the adhesive tape 320 shown in FIG. 12 replaces the adhesive tape 320 in the embodiments shown in FIG. 4 to FIG. 10, reference may be made to the relevant descriptions of the embodiments shown in FIG. 4 to FIG. 10.

FIG. 13 shows another substitute embodiment of the embodiment shown in FIG. 10.

The adhesive tape 320 in the embodiment shown in FIG. 13 differs from the adhesive tape 320 in the embodiment shown in FIG. 10 in that the left and right edges of the adhesive tape 320 in the embodiment shown in FIG. 13 are polygonal line edges. Each first outer tape portion 32012 includes one protruding portion 3201A. The protruding-side edge of the protruding portion 3201A is a polygonal line edge. The shape of each protruding portion 3201A is a triangle.

After the adhesive tape 320 shown in FIG. 13 replaces the adhesive tape 320 in the embodiment shown in FIG. 10, an edge of the lateral face body protection portion 3212 of the electrode plate assembly 30 on a side away from the main end face 3111A is a polygonal line edge containing two straight line edges.

For the rest of the embodiment of the electrode plate assembly after the adhesive tape 320 shown in FIG. 13 replaces the adhesive tape 320 in the embodiments shown in FIG. 4 to FIG. 10, reference may be made to the relevant descriptions of the embodiments shown in FIG. 4 to FIG. 10.

FIG. 14 shows another substitute embodiment of the embodiment shown in FIG. 10.

The adhesive tape 320 in the embodiment shown in FIG. 14 differs from the adhesive tape 320 in the embodiment shown in FIG. 10 in that the left and right edges of the adhesive tape 320 in the embodiment shown in FIG. 14 each are a combined edge containing a straight line edge and a curve edge. Each first outer tape portion 32012 includes two protruding portions 3201A. The protruding-side edge of each protruding portion 3201A is a curve edge. A straight line edge is disposed on an upper side and a lower side of the protruding portion 201A separately. The shape of each protruding portion 3201A is a semicircle.

After the adhesive tape 320 shown in FIG. 14 replaces the adhesive tape 320 in the embodiment shown in FIG. 10, an edge of the lateral face body protection portion 3212 of the electrode plate assembly 30 on a side away from the main end face 3111A is a combined edge that includes two straight line edges and two convex curve edges. The two straight line edges are located on two sides of the width direction of the electrode plate 311, and the two convex curve edges are located in the middle in the width direction of the electrode plate 311.

For the rest of the embodiment of the electrode plate assembly after the adhesive tape 320 shown in FIG. 14 replaces the adhesive tape 320 in the embodiments shown in FIG. 4 to FIG. 10, reference may be made to the relevant descriptions of the embodiments shown in FIG. 4 to FIG. 10.

**In** the above embodiments, when a polygonal line edge, a curve edge, or a combined edge is mentioned, the shape of the edge may be in other forms. For example, the shape of the protruding portion corresponding to a polygonal line edge may be a trapezoid instead, and the shape of the protruding portion corresponding to a curve edge or a combined edge may be a semi-ellipse instead.

Although the present disclosure has been described with reference to exemplary embodiments, various improvements may be made to the embodiments without departing from the scope of the present disclosure, and the components of the present disclosure may be replaced with equivalents. Particularly, to the extent that no structural conflict exists, various technical features mentioned in different embodiments may be combined in any manner. The present disclosure is not limited to the specific embodiments disclosed herein, but includes all technical solutions falling within the scope of the claims.

## Claims

1. An electrode plate assembly (30), comprising:
an electrode plate (31), comprising an electrode plate body (311), wherein the electrode plate body (311) comprises an end region (311A); and
a protection layer (32), fixed onto the electrode plate body (311), and comprising a protection layer body section (321) that covers the end region (311A) along an extension direction of the end region (311A), wherein the protection layer body section (321) comprises a main end face body protection portion (3211) and two lateral face body protection portions (3212) connected respectively to two sides of the main end face body protection portion (3211), the main end face body protection portion (3211) covers a main end face (3111A) of the end region (311A), and each of the lateral face body protection portions (3212) extends from the main end face (3111A) of the end region (311A) to an inner side of the electrode plate body (311) and covers a lateral face (3111B) of the end region (311A), the lateral face being close to the main end face (3111A).

2. The electrode plate assembly (30) according to claim 1, wherein a maximum distance (L1) from an edge (E) of the lateral face body protection portion (3212) to the main end face (3111A) of the end region (311A) is 2 mm to 100 mm, the edge (E) being located inside the main end face (3111A) of the end region (311A).

3. The electrode plate assembly (30) according to claim 1 or 2, wherein the protection layer (32) comprises adhesive tape (320) affixed to the electrode plate body (311).

4. The electrode plate assembly (30) according to any one of claims 1 to 3, wherein maximum distances (L1) from edges (E) of the two lateral face body protection portions (3212) to the main end face (3111A) of the end region (311A) are equal, the edges (E) being located inside the main end face (3111A) of the end region (311A).

5. The electrode plate assembly (30) according to any one of claims 1 to 4, wherein the two lateral face body protection portions (3212) are disposed symmetrically with respect to a thickness direction (Z) of the electrode plate (31).

6. The electrode plate assembly (30) according to any one of claims 1 to 5, wherein
an edge (E) of the lateral face body protection portion (3212), which is located inside the main end face (3111A) of the end region (311A), is a straight line edge; or
an edge (E) of the lateral face body protection portion (3212), which is located inside the main end face (3111A) of the end region (311A), is a polygonal line edge; or
an edge (E) of the lateral face body protection portion (3212), which is located inside the main end face (3111A) of the end region (311A), is a curve edge; or
an edge (E) of the lateral face body protection portion (3212), which is located inside the main end face (3111A) of the end region (311A), is a combined edge that comprises a straight line edge and a curve edge.

7. The electrode plate assembly (30) according to any one of claims 1 to 6, wherein
the lateral face body protection portion (3212) is rectangular; or
at least one protruding portion that protrudes away from the main end face (3111A) is comprised in the lateral face body protection portion (3212) on an edge side located inside the main end face (3111A) of the end region (311A).

8. The electrode plate assembly (30) according to claim 7, wherein an edge of the protruding portion on a protruding side is a polygonal line edge or a curve edge.

9. The electrode plate assembly (30) according to claim 8, wherein the lateral face body protection portion (3212) comprises a plurality of protruding portions connected sequentially along the extension direction of the end region (311A).

10. The electrode plate assembly (30) according to claim 9, wherein
at least two of the plurality of protruding portions are at least partially identical in shape and size.

11. The electrode plate assembly (30) according to any one of claims 1 to 10, wherein
the main end face body protection portion (3211) is in fit with and connected to the main end face (3111A) of the end region (311A) of the electrode plate (31); and
the lateral face body protection portion (3212) is in fit with and connected to the lateral face (3111B) of the end region (311A), the lateral face being close to the main end face (3111A).

12. The electrode plate assembly (30) according to any one of claims 1 to 11, wherein the protection layer (32) further comprises a protection layer extension section (322) connected to an end portion of the protection layer body section (321), the end portion being disposed along the extension direction of the end region (311A).

13. The electrode plate assembly (30) according to claim 12, wherein, along the extension direction of the end region (311A), a length (L2) of the protection layer extension section (322) is less than or equal to 20 mm.

14. The electrode plate assembly (30) according to claim 12 or 13, wherein, along the extension direction of the end region (311A), two protection layer extension sections (322) are connected to two ends of the protection layer body section (321) respectively, and lengths (L2) of the two protection layer extension sections (322) are equal.

15. The electrode plate assembly (30) according to any one of claims 12 to 14, wherein
the protection layer extension section (322) comprises a main end face extension protection portion (3221) toward an extension surface of the main end face (3111A) of the end region (311A) and a lateral face extension protection portion (3222) toward an extension surface of the lateral face (3111B) of the end region (311A); and/or
the protection layer extension section (322) comprises a lateral end face protection portion that covers a lateral end face (3111C) of the end region (311A), the lateral end face being disposed along the extension direction of the end region (311A).

16. The electrode plate assembly (30) according to any one of claims 1 to 15, wherein, at least one end region (311A) is located at an end of the electrode plate (31) along a length direction (X) of the electrode plate body (311), and the extension direction of the end region (311A) is a width direction (Y) of the electrode plate body (311).

17. The electrode plate assembly (30) according to any one of claims 1 to 16, wherein the electrode plate (31) is a positive electrode plate or a negative electrode plate.

18. An electrode assembly, comprising the electrode plate assembly (30) according to any one of claims 1 to 17.

19. The electrode assembly according to claim 18, wherein the electrode assembly is a jelly-roll electrode assembly, and the extension direction of the end region (311A) of the electrode plate assembly (30) is parallel to an axis of the jelly-roll electrode assembly.

20. A battery cell, comprising the electrode assembly according to claim 19.

21. A battery, comprising the battery cell according to claim 20.

22. An electrical device, comprising the battery according to claim 21, wherein the battery is configured to provide electrical energy for the electrical device.
